## Europäisches Patentamt

## European Patent Office

## Office européen des brevets

(11) Veröffentlichungsnummer: **0 268 819**
**B1**

## EUROPÄISCHE PATENTSCHRIFT

(45) Veröffentlichungstag der Patentschrift:
08.08.90

(51) Int. Cl.⁵: **F26B 3/22**, F26B 17/26, F26B 23/00

(21) Anmeldenummer: 87115330.0

(22) Anmeldetag: 20.10.87

(54) Verfahren und Vorrichtung zum Konditionieren von Schüttgutmaterial.

(30) Priorität: 27.11.86 DE 3640610

(43) Veröffentlichungstag der Anmeldung:
01.06.88 Patentblatt 88/22

(45) Bekanntmachung des Hinweises auf die Patenterteilung:
08.08.90 Patentblatt 90/32

(84) Benannte Vertragsstaaten:
AT BE DE ES FR GB IT NL SE

(56) Entgegenhaltungen:
EP-A- 0 114 937
EP-B- 0 030 947
DE-C- 2 153 435
DE-C- 2 659 335
US-A- 3 343 812

(73) Patentinhaber: Uhde GmbH, Friedrich-Uhde-Strasse 15,
D-4600 Dortmund 1(DE)

(72) Erfinder: Hederer, Hartmut, Dr.Dipl.-Ing., Driverweg 12,
D-4600 Dortmund 50(DE)
Erfinder: Hillebrand, Wolfgang, Dr.Dipl.-Chem.,
Westendorfstrasse 6, D-4600 Dortmund 41(DE)
Erfinder: Kreft, Manfred, Dipl.-Ing., Hohes Stück 8,
D-5802 Wetter 2(DE)

## Beschreibung

Die Erfindung betrifft ein Verfahren und eine Vorrichtung zum Konditionieren von Schüttgutmaterial mit Gehalt an verdampfbaren Bestandteilen, insbesondere von Braunkohle, Steinkohle, Torf, Holzabfälle, Klärschlamm, Abfallschlamm, verseuchtem Erdreich, Katalysatoren, Zeolithen und Filterkuchen, wobei das Material mittels Schwingförderer in Fließbewegung versetzt, in einer Erwärmungszone und einer Trocknungszone sukzessiv behandelt wird durch indirekten Wärmetausch. Ein derartiges Verfahren und eine derartige Vorrichtung ist aus der US-A 3 343 812 bekannt.

Unter Konditionieren wird im wesentlichen das Reduzieren der verdampfbaren Bestandteile, d.h. das Trocknen, verstanden und eventuell noch das Temperieren, das Herunterkühlen des heißen Materials auf die zulässige Lagertemperatur. Das Verfahren wird kontinuierlich durchgeführt. Bei derartigen Verfahren und Vorrichtungen ist es erforderlich, den materialbedingten Eigenschaften in jedem Stadium des Verfahrensganges Rechnung zu tragen, damit es nicht zu Störungen kommt.

Aus den Druckschriften DE-PS 849 226, DE-PS 21 53 435, EP-PS 00 30 947 und GB-PS 857 250 sind weitere Vorrichtungen zur Konditionierung von Schuttgütern bekannt. Dabei kann die Konditionierung, d.h. Aufwärmung, sowohl direkt als auch indirekt erfolgen. Die bekannten Vorrichtungen und die mit ihnen durchgeführten Verfahren lassen sich nicht universell für die verschiedensten Materialien einsetzen, da sie nur teilweise die Materialeigenschaften berücksichtigen, beschränkt im Wärmetausch sind und aufwendig im Platzbedarf.

Der Erfindung liegt die Aufgabe zugrunde, Schüttgutmaterial mit Gehalt an verdampfbaren Bestandteilen, mit einem breiten Korngrößenbereich und mit den verschiedensten Materialeigenschaften energiegünstig und störungsfrei kontinuierlich zu konditionieren. Dabei ist der apparative Aufwand weitgehend zu reduzieren.

Diese Aufgabe wird, auf das Verfahren bezogen, erfindungsgemäß dadurch gelöst, daß das Schüttgutmaterial mit Gehalt an verdampfbaren Bestandteilen mittels Schwingförderer in Fließbewegung versetzt wird, in einer Erwärmungszone und einer Trocknungszone sukzessiv behandelt wird durch indirekten Wärmetausch, wobei das Schüttgutmaterial in einer Erwärmungszone von Umgebungstemperatur bis auf höchstens 170 °C erwärmt wird und die Erwärmung abgekapselt unter dem Dampfdruck der Endtemperatur erfolgt mit Abzug des Brüden und in der folgenden abgekapselten Trocknungszone der Wassergehalt des Schüttgutmaterials unter dem Dampfdruck der entstehenden Brüden reduziert wird durch weitere, indirekte Wärmezufuhr und Abzug des Brüden und in der Trocknungszone mehrmals das Schüttgutmaterial in Grobgut und Feingut getrennt und das Feingut unverzüglich auf feuchteres Grobgut aufgegeben wird und wobei eine mehrfache Umwälzung des Gutes während der Wärmezufuhr in den beiden Zonen erfolgt.

Nach Ausbildungen des Verfahrens wird der aus dem beheizten Schüttgutmaterial austretende verschmutzte Brüden aus der Trocknungszone ganz oder teilweise zur Beheizung der Erwärmungszone eingesetzt bzw. nach mechanischer Verdichtung zumindest teilweise zur indirekten Erzeugung von sauberem Heizdampf für die Erwärmungszone eingesetzt.

Eine weitere Ausbildung des Verfahrens sieht vor, daß Heizmittelkondensat aus der Trocknungszone für die Beheizung der Erwärmungszone eingesetzt wird.

Handelt es sich bei dem zu konditionierenden Schüttgutmaterial um solches, das nicht mit der hohen Endtrocknungstemperatur gelagert werden kann, wird nach einer weiteren Ausgestaltung der Erfindung das erhitzte Schüttgutmaterial aus der Trocknungszone direkt einer Kühlzone im Schwingförderer zugeführt, wo es unter Inertgasabschluß bis auf mindestens 60 °C indirekt abgekühlt wird.

Soll der Trocknungsgrad des Schüttgutmaterials weiter gesenkt werden, wird in die Trocknungszone ein trockener Inertgasstrom zugegeben und im Gegenstrom zum Schüttgutmaterial geführt.

Das gefundene Verfahren läßt sich besonders vorteilhaft in einer erfindungsgemäßen Vorrichtung durchführen, die die konstruktiven Kennzeichen des Hauptvorrichtungsanspruches aufweist.

Um den verschiedenen Anforderungen durch unterschiedliches Schüttgutmaterial nachzukommen, wird die Vorrichtung weitergebildet gemäß den Kennzeichen der Unteransprüche.

Die mit der Erfindung erzielten Vorteile sind vielgestaltig. So wird infolge der räumlichen Trennung durch Abkapselung von Erwärmungszone und Trocknungszone erreicht, daß der ausgetriebene Brüden aus der Trocknungszone nicht an dem noch kalten aufgegebenen Schüttgutmaterial kondensiert. Die mehrfache Umwälzung durch Wendeleisten sowie die Kombination der mehrmaligen Klassierung des Schüttgutmaterials in Grob- und Feingutanteil und wiederholte Aufgabe des Feingutanteils auf das verbleibende Grobgut in einer Gutfließbewegung auf einer Schwingfördereinrichtung führt zu inniger Durchmischung der unterschiedlich heißen Materialanteile. Während der Fließbewegung des Gutes auf der Schwingfördervorrichtung kommt es teilweise zur Entmischung, d.h. Feingut reichert sich unten im Gutstrom an und Grobgut schwimmt auf. Dies hat zur Folge, daß das Feingut stärker aufgeheizt wird als das Grobgut und damit auch trockner wird. Die zusätzliche mehrfache Umwälzung des getrennten und/oder gemischten Gutes in den beiden Zonen führt zu besserem Wärmeübergang von den Heizplatten auf das Gut. Auch bei vollständiger Vermischung benötigt das Grobgut eine längere Trocknungszeit als das Feingut. Die Klassierung und wiederholte Aufgabe und anschließende Vermischung des heißen Feingutes beseitigt diesen Nachteil.

Die brüdendichte Trennung der Erwärmungszone von der Trocknungszone erlaubt die getrennte Erfassung der entstehenden heißen Brüden aus der Trocknungszone und ihren Einsatz zur Beheizung der Erwärmungszone. Somit kann der Heizenergiebedarf reduziert werden. Falls das Brüdenvolumen ausreichend groß für eine Verdichtung von verschmutztem Dampf in einem Brüdenkompressor ist, kann es vorteilhaft für die indirekte Erzeugung von sauberem Heizdampf in einem Verdampfer für die Erwärmungszone eingesetzt werden. Ist das Heizdampfkondensat aus der Trocknungszone heiß genug, kann es ebenso für die Beheizung der Erwärmungszone eingesetzt werden.

Eine evtl. erforderliche, direkt an die Trocknungszone anschließende, gekapselte Kühlzone erlaubt eine Inertisierung des Volumens über dem Schüttgutmaterial und damit vorteilhaft die Vermeidung von Selbstentzündung des trockenen Schüttgutmaterials.

Die erfindungsgemäße Vorrichtung weist gegenüber den bekannten Schwingförderern zur Konditionierung von Schüttgutmaterial wesentliche Vorteile auf. So wird es hier möglich, bei geringem Platzbedarf eine hohe Wärmeübertragungsleistung aufzubringen. Die separate Kapselung der einzelnen Zonen führt zum einen nicht zur gegenseitigen Beeinflussung der Konditionierungsstufen durch den Brüden und zum anderen zur energieoptimalen Ausnutzung des eingesetzten Heizdampfes. Darüber hinaus wird durch die mehrmalige Klassierung mittels der Spaltroste der Wärmeübergang an das Grobkorn erhöht und eine homogene Endfeuchte erzielt. Die in der Erwärmungs- und Trocknungszone eingebauten zusätzlichen Wendeleisten fördern die Durchmischung je Umlauf des Materials auf jedem Boden. Die zwischen den Böden angeordneten Rutschen an den Abwurföffnungen reduzieren den Staubaustrag durch den aufsteigenden Brüdenstrom.

Die in den Vorrichtungsansprüchen enthaltenen konstruktiven Merkmale führen zu Vorteilen, die im Rahmen der Vorrichtungsbeschreibung erläutert werden.

Die Erfindung wird beispielhaft anhand von Schemata und Zeichnungen dargestellt und nachfolgend beschrieben:

Es zeigen:

Fig. 1 Schwingplattentrockner im Schnitt
Fig. 2 Wärmeschaltbild in Standardausführung
Fig. 3 Wärmeschaltbild mit Brüdenkondensatnutzung
Fig. 4 Wärmeschaltbild mit Heizdampfkondensatnutzung
Fig. 5 Wärmeschaltbild mit teilweiser Brüdenkompression
Fig. 6 Explosionsdarstellung einer Mehrzahl von Schwingplatten auf der Schwingwelle
Fig. 7 Detailzeichnung Übergabestelle
Fig. 8 Detailzeichnung Wendeleiste
Fig. 9 Detailszeichnung Spaltrost

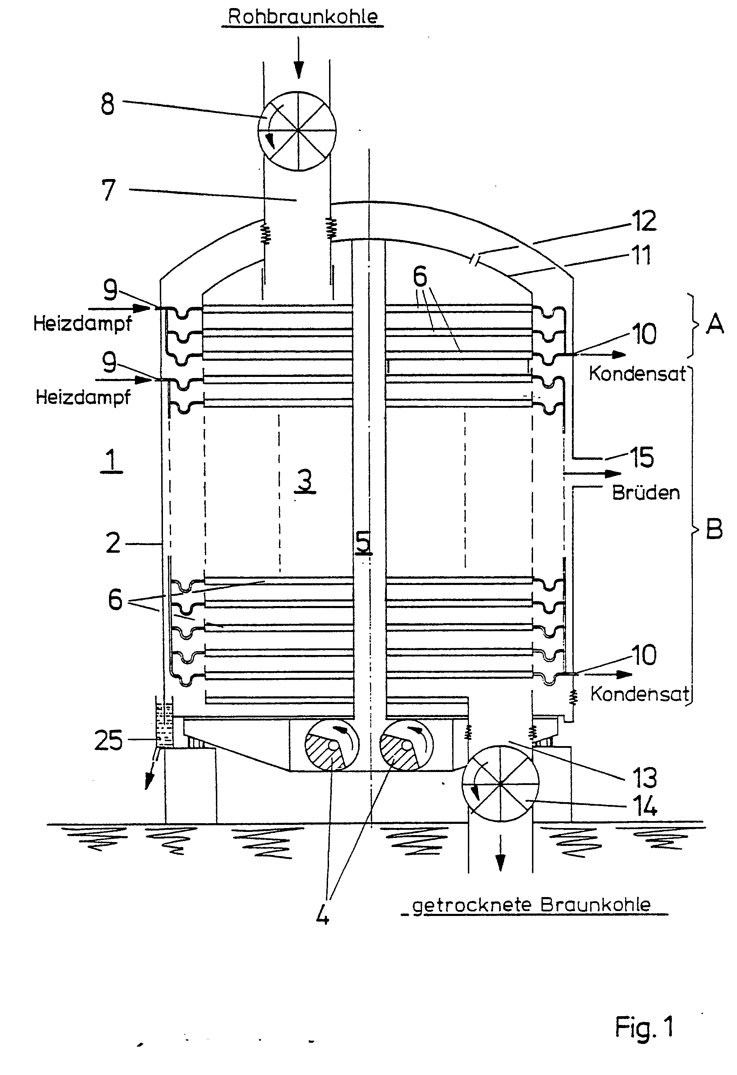

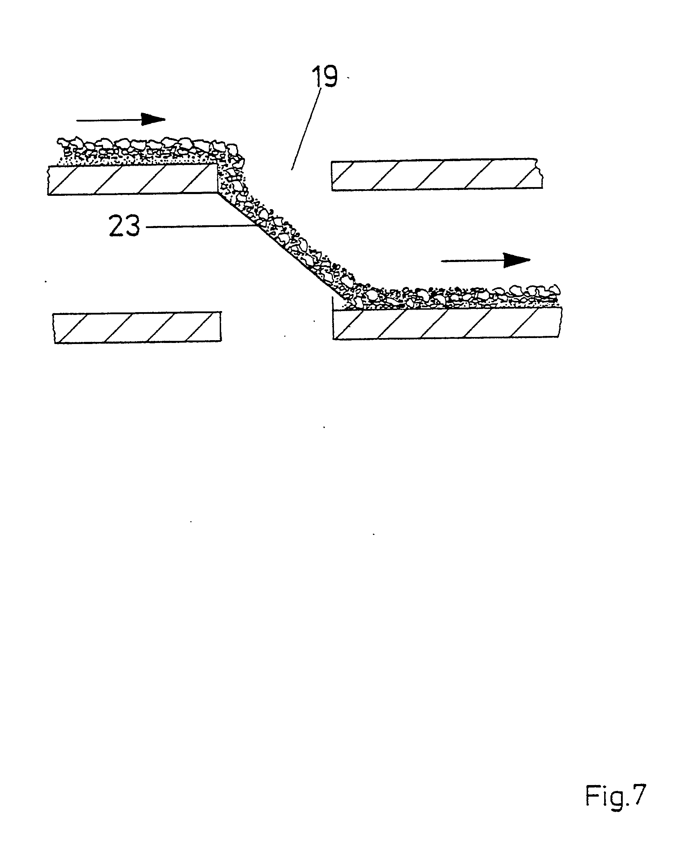

Nach Fig. 1 besteht der Schwingplattentrockner 1 im wesentlichen aus dem stationären Gehäuse 2, in dem der Schwingplattenförderer 3 mit den Schwingantrieben 4, der Schwingwelle 5 und einer Vielzahl von waagerechten beheizbaren Platten 6 mit je einer Abwurföffnung angeordnet sind. Die Schüttgutaufgabe auf die erste Platte 6.1 erfolgt durch das Materialaufgaberohr 7 mittels der Zellenschleuse 8. Die ersten drei Platten sind an eine Heizmittelzufuhr 9 und Heizmittelabfuhr 10 angeschlossen und außenseitig mittels der Haube 11 gekapselt. Bei seinem Weg über die drei ersten Platten der Erwärmungszone A wird das Schüttgut bis auf die Verdampfungstemperatur, hier z.B. bei Wasser 100 °C, aufgeheizt. Evtl. austretender Brüden wird über den Auslaß 12 abgezogen. Bei geschlossenem Auslaß 12 strömt miteingetragenes Inertgas über den Abwurfschacht aus. Aus der Abwurföffnung der letzten Platte der Erwärmungszone fällt das Schüttgutmaterial auf die erste Platte der Trocknungszone B, um dann nacheinander über die weiterfolgenden Platten gefördert zu werden unter ständiger Behezung bis zum gewünschten Trocknungsgrad. Über das Materialabzugsrohr 13 mittels der Zellenschleuse 14 verläßt das getrocknete Schüttgutmaterial den Schwingplattentrockner. Die Platten 6 der Trocknungszone B suind ebenfalls an eine Heizmittelzufuhr 9 und Heizmittelabfuhr 10 angeschlossen. Der in der Erwärmungszone entstehende Brüden wird über den Auslaß 15 abgeführt. Der spezielle Aufbau der Platten 6 und ihre Zuordnung wird in der Beschreibung der Fig. 7-10 erläutert.

In vorteilhafter Weise kann das Gehäuse 2 als einseitig offener Behälter in einer Wassertauchung 25 stehend angeordnet werden.

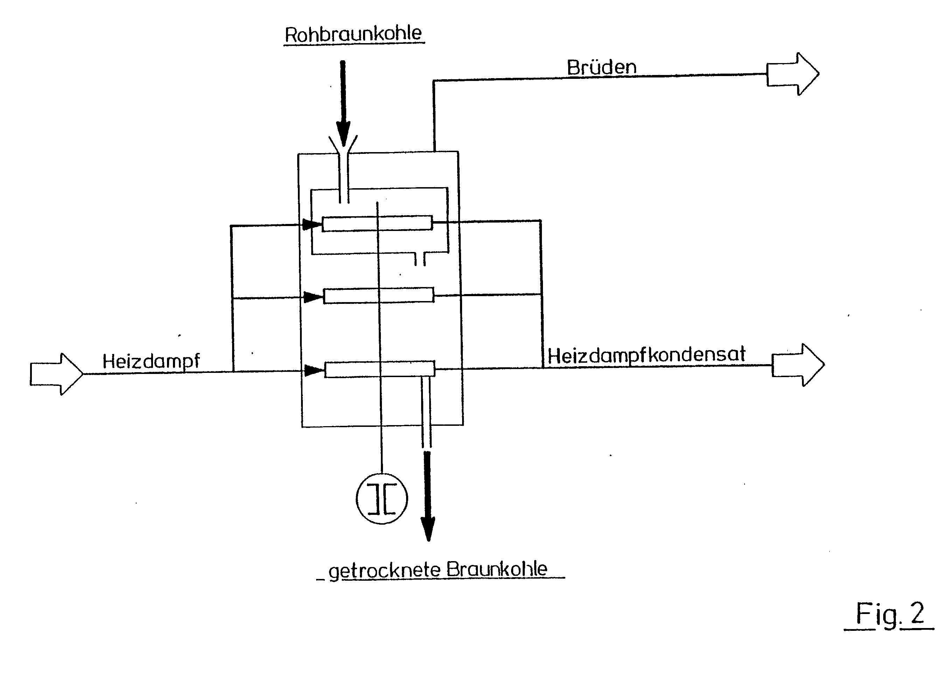

Nach Fig. 2, dem Wärme- und Bilanzbild, werden 48,8 t/h Rohbraunkohle von 20 °C und 58 % Trockenmasse über die Zellenschleuse 8 dem Schwingplattentrockner 1 aufgegeben. Mittels 30,5 t/h Heizdampf von 180 °C wird diese Braunkohle auf einen Restwassergehalt von 18 % reduziert und aus dem Schwingplattentrockner abgezogen. Muß die heiße, trockene Rohbraunkohle beträchtlich abgekühlt werden, wird der Trocknungszone B eine gekapselte Kühlzone C innerhalb des Schwingplattentrockners nachgeschaltet. Die Platten der Kühlzone C werden von Kühlwasser durchflossen. Noch ausdampfender Brüden wird zusammen mit aufgegebenem Inertgas in den Innenraum des Trockners 1 geführt bzw. gesondert abgezogen. Der im Trockner entstehende Brüden wird über Auslaß 15 abgezogen.

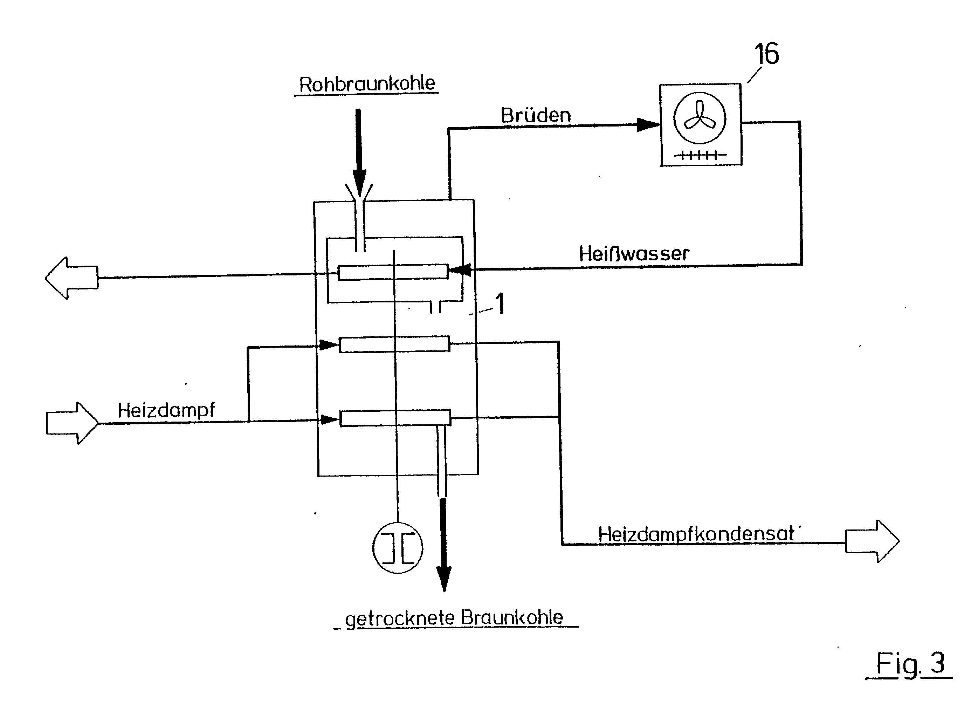

Nach Fig. 3 werden nur die Platten 6 der Trocknungszone B mit dem Heizdampf beaufschlagt. Der entstehende Brüden aus der wasserhaltigen Rohbraunkohle wird über ein Gebläse 16 geführt, kondensiert und als Heißwasser in die Platten der Erwärmungszone A geleitet. Es ergibt sich hierdurch eine ca. 8 %ige Heizdampfersparnis.

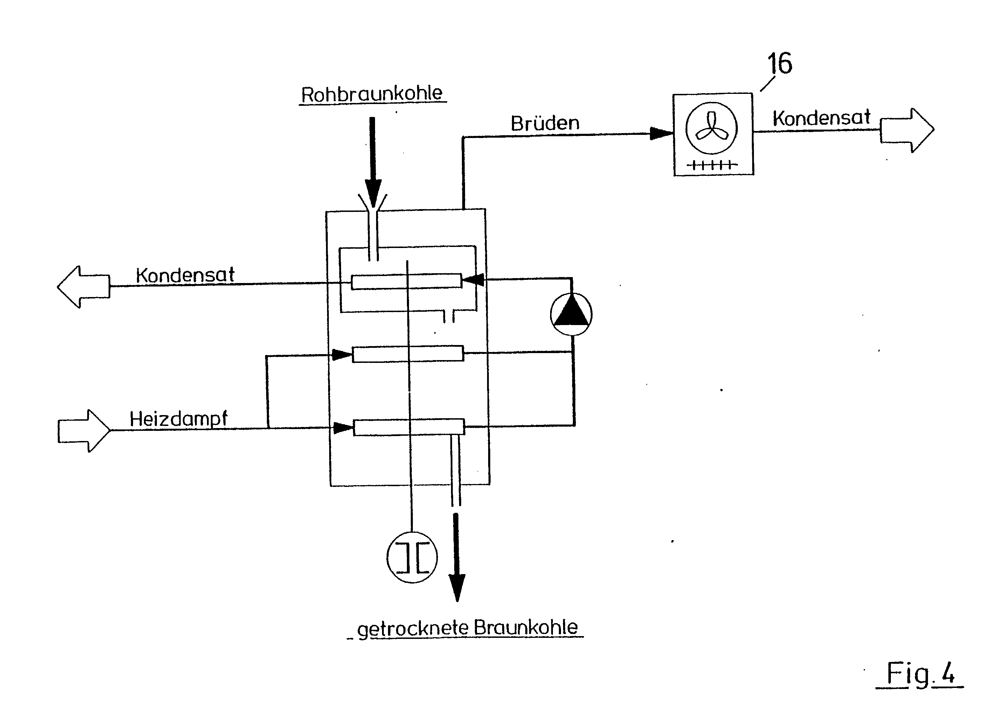

Nach Fig. 4 wird der Schwingplattentrockner 1 so gefahren, daß bei gleicher Aufgabemenge an Rohbraunkohle das Kondensat aus den Platten der Trocknungszone durch die Platten der Wärmungszone geführt wird. Der erhaltene Brüden wird abgeführt und steht zur Wärmegewinnung zur Verfügung.

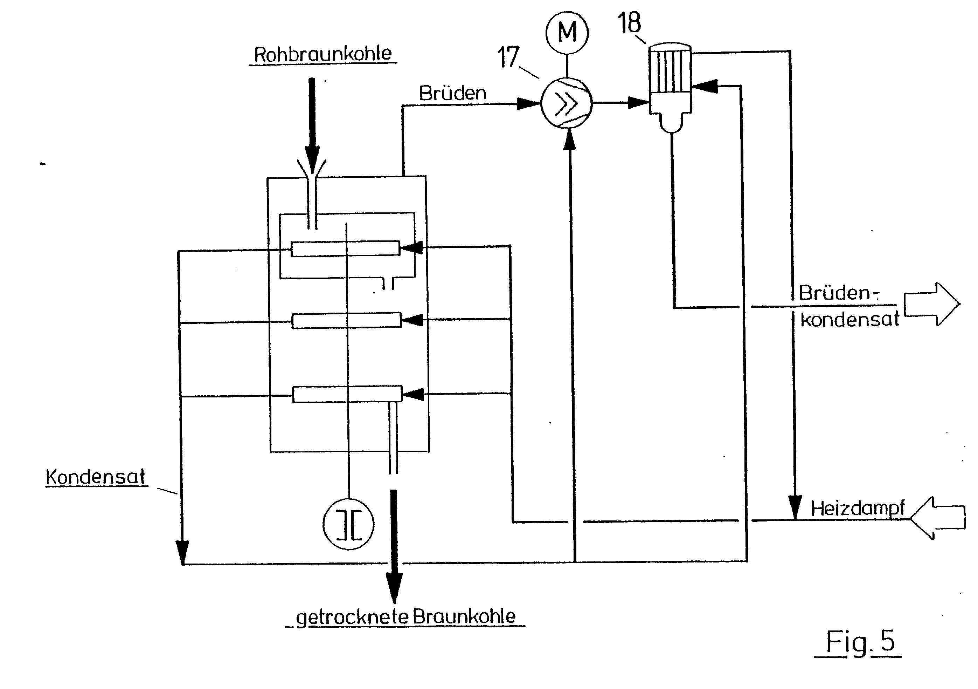

Nach Fig. 5 werden bei gleichem Durchsatz von Rohbraunkohle durch den Schwingplattentrockner 1 die Platten 6 der Trocknungszone B mit frischem Heizdampf beschickt. Der aus dem Gehäuse abgezogene Brüden wird teilweise im Brüdenkompressor 17 verdichtet, dadurch überhitzt und anschließend im Wärmetauscher 18 zur Erzeugung von Heizdampf für die Erwärmungszone A eingesetzt. Überschüssiger Brüden wird einer anderweitigen Verwertung zugeführt.

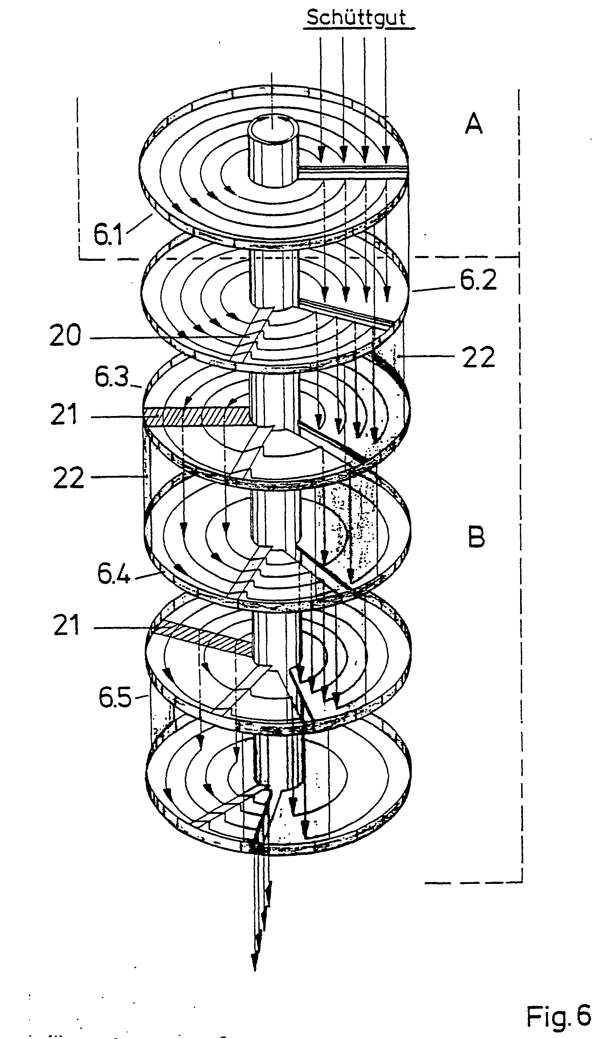

In Fig. 6 sind zur besseren Darstellung und zum Verständnis des Ablaufs der Klassierung und wiederholten Mischung der Fein- und Grobkornanteile die Platten 6 in Explosionsdarstellung übermäßig weit voneinander dargestellt. Von der letzten Platte 6.1 der Erwärmungszone A fällt das Schüttgutmaterial durch die Abwurföffnung 19 über die nicht sichtbare Rutsche auf die erste Platte 6.2 des Trocknungsteils B. Hier bewegt sich das Schüttgutmaterial einen Umlauf lang auf der beheizten Platte und wird mittels der Wendeleiste 20 durchmischt, bevor es zur Abwurföffnung 19 auf dieser Platte 6.2 gelangt. Die Wirkung der Wendeleiste, d.h. eine Durchmischung des Materials ist deshalb vorteilhaft, da bei der vorliegenden Schwingförderung von Schüttgutmaterial unterschiedlicher Korngröße eine Anreicherung des Feingutanteils am Boden und ein Aufschwimmen des Grobgutanteils auf dem Förderstrom auftritt. Dabei wird der Feingutanteil stärker aufgeheizt und überträgt die Wärme an das Grobgut. Eine Übertrocknung des Feingutes findet nicht statt. In die folgende Platte 6.3 ist nach ca. einem halben Umlauf der Spaltrost 21 eingebaut, der sich über die gesamte Breite des belegbaren Plattenringes erstreckt. Bei der Fließbewegung des Schüttgutmaterials über den Spaltrost fällt der Feingutanteil durch den Rost auf das auf der Platte 6.4 befindliche Grobgut, das von der Platte 6.3 durch die Abwurföffnung 19 und die nicht sichtbare Rutsche auf die Platte 6.4 gelangte. Während des nun gemeinsamen Weges des Feingutes mit dem Grobgut wandert der Feingutanteil nach unten durch den aufschwimmenden Grobgutanteil und überträgt die Wärme unter Feuchtigkeitsaufnahme. Nach einer frei wählbaren Wegstrecke, d.h. Teilumlauf, mit einer oder mehreren Durchmischungen mittels eingebauter Wendeleisten fällt das gesamte Material abermals über eine Rutsche auf die Platte 6.5. Von hier aus beginnt es nun seinen gemeinsamen Umlauf bis zum nächsten Spaltrost. Platten mit Spaltrost und solche ohne Spaltrost folgen abwechselnd in solcher Anzahl, bis das Schüttgutmaterial auf der letzten Platte den erforderlichen Restgehalt an verdampfbaren Bestandteilen aufweist.

Um an den Stellen der Durchmischung durch Wendeleisten, an den Spaltrosten und den Abwurföffnungen einen Staubaustrag durch den aufsteigenden Brüden zu mindern, sind in diesem Bereich mindestens zwei Platten mittels Zylinderwandsegmenten 22 verbunden.

Gemäß Fig. 7 sind die Abwurföffnungen 19 der einzelnen Platten alle übereinanderliegend und durch Rutschen 23 miteinander verbunden. Freier Fall und damit Stauben des trockenen Schüttgutmaterials wird weitgehend vermieden.

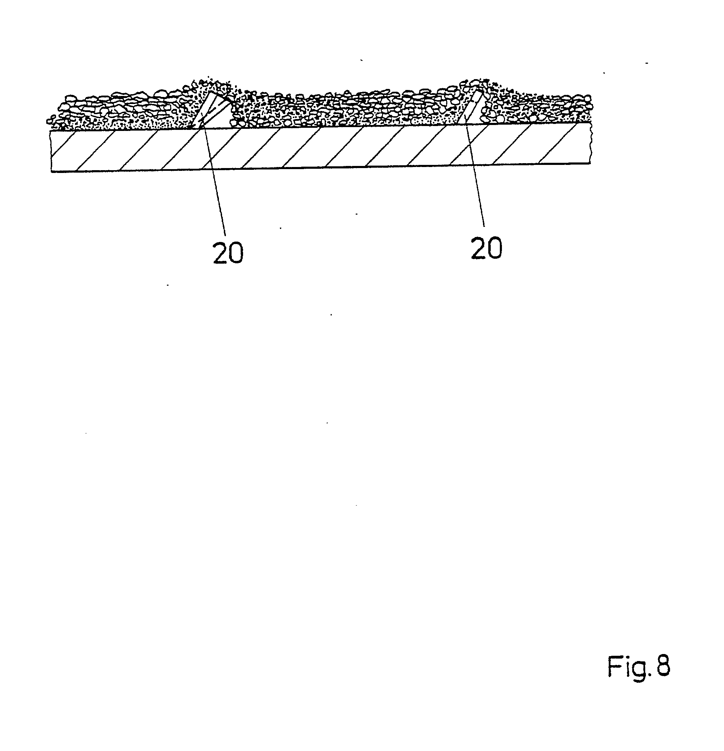

Gemäß Fig. 8 erfolgt durch die schräg angeordneten Wendeleisten 20 eine mehr oder minder gute Durchmischung des Schüttgutmaterials. Vorteilhafterweise werden dabei die Wendeleisten so auf den Platten angeordnet, daß es weder zu übermäßigem Stau des Schüttgutmaterials noch zu dessen ungleichmäßiger Verteilung auf dem Plattenring kommt.

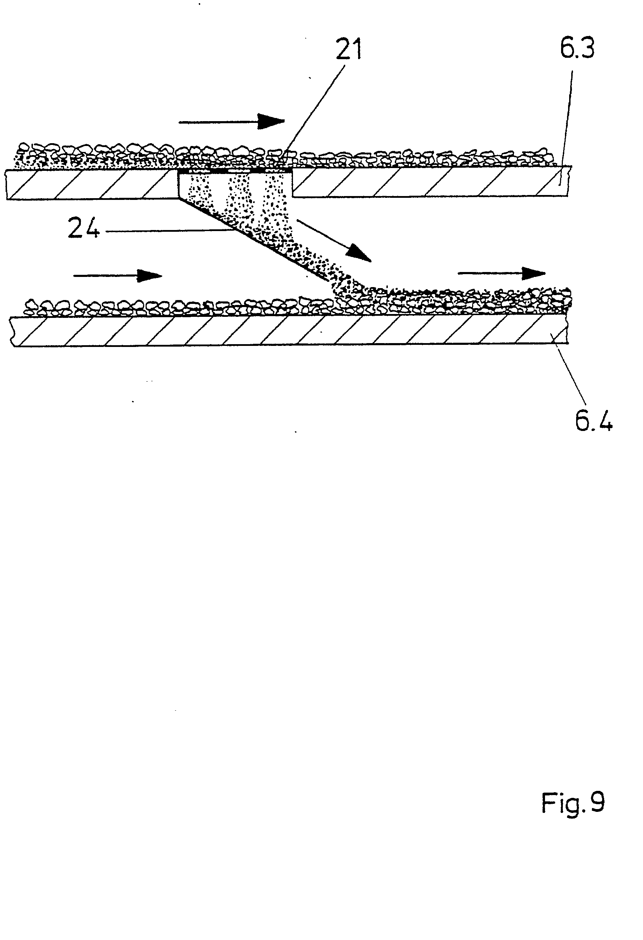

Nach Fig. 9 fällt das Feingut von der Platte 6.3, z.B. durch den Spaltrost 21 über die Rutsche 24 auf das darunter vorbeifließende Grobgut auf der Platte 6.4. Die Rutsche 24 endet oberhalb der Grobgutschicht, so daß kein Stau auf derselben eintreten kann.

Der Einbau von Spaltrosten und die dadurch erfolgende Klassierung in Feingut und Grobgut weist einen entschei denden Vorteil des Verfahrens auf. Bekanntlich trocknet Grobgut langsamer als Feingut. Um einen homogenen Feuchtigkeitsgehalt aller Kornfraktionen zu erhalten, muß die Verweilzeit des Grobgutes größer sein als die der feineren Anteile. Dies kann durch Verringerung der Trocknungswegstrecken für den Feingutanteil mittels Spaltrosten erreicht werden.

Die Spaltroste vermindern die Verweilzeit des Feinguts pro Boden ca. auf die Hälfte, da das Feingut nach halbem Plattenumlauf abgesiebt und auf den nächsten Boden auf das weiter geförderte Grobgut wieder aufgegeben wird. Damit wird auch der Vorteil des besseren Wärmeubergangs durch Feingut an Grobgut ausgenutzt.

Je nach Feuchtegehalt im Kornspektrum des Schüttgutmaterials wird die Folge von Schwingplatten mit oder ohne Spaltrosten und die Länge der Wege der einzelnen Gutfraktionen variabel gewählt, auch entsprechend den Wärmeübergangswerten des Schüttgutmaterials.

## Patentansprüche

1. Verfahren zum Konditionieren von Schüttgutmaterial mit Gehalt an verdampfbaren Bestandteilen, insbesondere von Braunkohle, Steinkohle, Aktivkohle, Torf, Holzabfällen, Klärschlamm, Abfallschlamm, verseuchtem Erdreich, Katalysatoren, Zeolithen und Filterkuchen, wobei das Material mittels Schwingförderer in Fließbewegung versetzt, in einer Erwärmungszone und einer Trocknungszone sukzessiv behandelt wird durch indirekten Wärmetausch dadurch gekennzeichnet, daß das Schüttgutmaterial

a) in der Erwärmungszone von Umgebungstemperatur bis auf höchstens 170 °C erwärmt wird und die Erwärmung abgekapselt mindestens unter dem Dampfdruck der Endtemperatur erfolgt mit Abzug des Brüden,

b) in der folgenden, abgekapselten Trocknungszone der Gehalt an verdampfbaren Bestandteilen des Schüttgutmaterials unter dem Dampfdruck der entstehenden Brüden reduziert wird, durch weitere indirekte Wärmezufuhr und Abzug des Brüden,

c) in der Trocknungszone mehrmals in Grobgut und Feingut getrennt und das Feingut unverzüglich auf feuchteres Grobgut aufgegeben wird,

d) eine mehrfache Umwälzung des Gutes während der Wärmezufuhr in beiden Zonen erfolgt.

2. Verfahren nach Anspruch 1, dadurch gekennzeichnet, daß der Brüden aus der Trocknungszone ganz oder teilweise zur Beheizung der Erwärmungszone eingesetzt wird.

3. Verfahren nach Anspruch 1, dadurch gekennzeichnet, daß der Brüden aus der Trocknungszone nach mechanischer Verdichtung zumindest teilweise zur indirekten Erzeugung von Heizdampf für die Erwärmungszone eingesetzt wird.

4. Verfahren nach Anspruch 1, dadurch gekennzeichnet, daß Heizmittelkondensat aus der Trocknungszone für die Beheizung der Erwärmungszone eingesetzt wird.

5. Verfahren nach Anspruch 1 bis 4, dadurch gekennzeichnet, daß das heiße Schüttgutmaterial in einer gekapselten Zone gekühlt wird bis auf Umgebungstemperatur.

6. Verfahren nach mindestens einem der Ansprüche 1 bis 5, dadurch gekennzeichnet, daß in die Trocknungszone ein Inertgas zur Minderung des Dampfpartialdruckes eingeführt wird.

7. Verfahren nach Anspruch 6, dadurch gekennzeichnet, daß der Inertgasstrom im Gegenstrom zum Schüttgutmaterial geführt, am Ende der Trocknungszone aufgegeben wird und mengenmäßig einen Bruchteil der in der Trocknungszone ausgetriebenen verdampfbaren Bestandteilen beträgt.

8. Vorrichtung zur Durchführung des Verfahrens nach den Ansprüchen 1 bis 7, bestehend aus einem senkrecht angeordneten Schwingplattentrockner (1), der eine Vielzahl von doppelwandigen, kreisförmigen, waagerechten Platten (6) mit Außenwand, mit mindestens einer Abwurföffnung (13) je Boden, auf gemeinsamer zentraler Schwingwelle (5) aufweist, vollständig gekapselt ist durch ein Gehäuse (2) mit mindestens einer oberen Materialaufgabe und einer unteren Materialabzugsvorrichtung und die doppelwandigen Platten Anschlüsse (9, 10) für Wärmeträgerzu- und -abfuhr aufweisen, dadurch gekennzeichnet daß

a) in Fließrichtung des Schüttgutmaterials mindestens die zwei ersten Platten (6) des Schwingförderapparates eine separate Haube (11) aufweisen mit eigener Materialaufgabe- und Materialabzugsöffnung,

b) mindestens ein Teil der Platten (6) der Trocknungszone (B) mindestens einen radial verlaufenden Spaltrost (21) als Siebstrecke zur Trennung in mindestens einen Grobgut- und Feingutanteil aufweisen,

c) mindestens ein Teil der Platten der Erwärmungs- und der Trocknungszone (A, B) Wendeleisten (20) aufweisen,

d) jede Platte (6) an ihrer Abwurföffnung (19) mit einer Rutsche (24) zur folgenden Platte ausgebildet ist.

9. Vorrichtung nach Anspruch 8, dadurch gekennzeichnet, daß die Materialaufgabe und Materialabzugsvorrichtungen als Kammer- oder Zellradschleusen (8, 14) ausgebildet sind.

10. Vorrichtung nach Anspruch 8 und 9, dadurch gekennzeichnet, daß die Schlitze der Spaltroste (21) tangential oder geneigt dazu verlaufen.

11. Vorrichtung nach Anspruch 10, dadurch gekennzeichnet, daß unterhalb jedes Spaltrostes (21) die Rutsche (24) an der unteren Fläche der Platte (6) angebracht ist.

12. Vorrichtung nach Anspruch 8 bis 11, dadurch gekennzeichnet, daß die Wendeleisten (20) zur Drehachse hin im Winkel zum Radialstrahl stehen.

13. Vorrichtung nach Anspruch 8 bis 12, dadurch gekennzeichnet, daß die Wendeleisten (20) von innen nach außen verlaufend unterschiedliche Höhe aufweisen.

14. Vorrichtung nach Anspruch 8 bis 13, dadurch gekennzeichnet, daß die Rutsche (23) die obere Platte (6) mit der unteren Platte (6) verbindet.

15. Vorrichtung nach Anspruch 8 bis 14, dadurch gekennzeichnet, daß mehrere Platten (6) am Rand im Bereich von Rutschen (23, 24), Wendeleisten (20) und Spaltrosten (21) mittels Zylinderwandsegmenten (22) verbunden sind.

16. Vorrichtung nach Anspruch 8 bis 15, dadurch gekennzeichnet, daß die innere Wand des Gehäuses (2) als Kondensator ausgebildet ist.

17. Vorrichtung nach Anspruch 8 bis 16, dadurch gekennzeichnet, daß das Gehäuse (2) als einseitig offener Behälter in einer Wassertauchung (25) steht.

**Claims**

1. Process for conditioning bulk material containing vaporizable ingredients such as lignite, hard coal, activated carbon, peat, waste wood, clarifier sludge, waste sludge, contaminated earth, catalysts, zeolites and filter cake, the material flow being maintained by means of a vibrating plate conveyor and the material being treated in a heating and a downstream drying section using an indirect heat exchange method, characterized in that

a) the bulk material is heated from the ambient temperature to a max. value of 170°C in the enclosed heating section, i.e. in the presence of the remaining steam pressure and at the final temperature, withdrawing the vapour from this section;

b) the vaporizable ingredients contained in the bulk material are reduced in the presence of the steam pressure originating from the vapour in the downstream drying section and with the aid of further heat supplied indirectly, the vapour being withdrawn;

c) the bulk material is several times separated into fine and coarse fractions in the drying section, the fines being immediately recycled and re-mixed with the damper coarse fractions;

d) the bulk material is mixed several times in both sections while being heated.

2. Process according to claim 1, characterized in that the vapour forming in the drying section is partly or completely used for heating the heating section-

3. Process according to claim 1, characterized in that the vapour forming in the drying section is compressed in a compressor and at least partly used for the indirect production of heating steam for the heating section.

4. Process according to claim 1, characterized in that the heating condensate originating from the drying section is used for heating the heating section.

5. Process according to claims 1 to 4, characterized in that the hot bulk material is cooled to the ambient temperature in an enclosed cooling section.

6. Process according to at least one of claims 1 to 5, characterized in that inert gas is fed to the drying section in order to reduce the partial pressure of the steam.

7. Process according to claim 6, characterized in that the inert gas stream fed into the rear part of the drying section flows in the opposite direction to the bulk material, the quantity of said gas being a fraction of the vaporizable ingredients set free in the drying section.

8. Device for the process according to claims 1 to 7, consisting of a vertical vibrating plate drier (1) equipped with a plurality of horizontal circular double-wall plates (6), each of said plates having external wall segments and at least one discharge opening (13) and being mounted on the common vibrating shaft (5) in the centre, shell (2) enclosing the complete structure and having at least one upper material inlet and one lower material outlet as well as double-wall plate connections (9, 10) for feeding and withdrawing the heating fluid, characterized in that

a) at least the first two plates (6) in the flow direction of the vibrating plate conveyor are enclosed by a separate shell (11) with separate material inlet and outlet;

b) at least some plates (6) of drying section B have a radial slot-type grid (21) required for the separation of the bulk material into at least one fine and coarse fraction;

c) at least some plates of the heating and drying sections (A, B) have mixing jibs (20);

d) each plate (6) has a chute (24) mounted near discharge opening (19) and pointing towards the plate below.

9. Device according to claim 8, characterized in that the material inlet and outlet are equipped with lift-lock or star-wheel feeders (8, 14).

10. Device according to claims 8 and 9, characterized in that the slots of grid (21) are arranged tangentially or placed obliquely.

11. Device according to claim 10, characterized in that a chute (24) located under each grid (21) of plate (6) is mounted on the underside of plate (6).

12. Device according to claims 8 to 11, characterized in that the mixing jibs (20) are radially inclined as seen from the axis of rotation.

13. Device according to claims 8 to 12, characterized in that the mixing jibs (20) have different heights from the internal to the external side.

14. Device according to claims 8 to 13, characterized in that chute (23) serves as connection between the upper plate (6) and the lower plate (6).

15. Device according to claims 8 to 14, characterized in that several plates (6) are linked by means of cylindrical wall segments (22) in the areas of chutes (23, 24), mixing jibs (20) and slotted grids (21).

16. Device according to claims 8 to 15, characterized in that the internal wall of shell (2) is designed in such a manner that it can be used as condenser.

17. Device according to claims 8 to 16, characterized in that shell (2) is open at one end and placed in a water seal (25).

**Revendications**

1. Procédé de conditionnement de matière en vrac contenant des composants évaporables tels que la lignite, la houille, le charbon actif, la tourbe, les déchets de bois, les boues de curage, les boues de déchets, les terrains contaminés, les catalyseurs, les zéolithes et les gâteaux de filtre, au cours duquel les matières sont écoulées au moyen de convoyeurs vibrants et successivement traitées, dans une zone d'échauffement et une zone de séchage, par échange indirect de chaleur, méthode caractérisée par le fait que

a) la matière en vrac est porteé, dans la zone d'échauffement de la température ambiante à une température maximale de 170°C et l'échauffement se produit en espace clos au moins à la pression de la température finale avec évacuation de la buée;

b) dans la zone suivante, celle du séchage – qui est un espace clos – la teneur en composants évaporables de la matière en vrac est réduite sous la pression de le vapeur produite et grâce à la chaleur acheminée indirectement et à l'évacuation des buées;

c) dans La zone de séchage, les matières en vrac sont séparées plusieurs fois en grosses particules et particules fines, celles-ci étant immédiatement mêlées aux grosses particules plus humides;

d) les matières sont mélangées plusieurs fois, dans les deux zones, su cours de l'échaufrement.

2. Procédé correspondant à la revendication 1, caractérisé par l'utilisation totale ou partielle des buées dégagées dans la zone de séchage pour le chauffage de la zone d'échauffement.

3. Procédé correspondant à la revendication 1, et selon lequel la buée de la zone de séchage est, après compression mécanique, utilisée au moins en partie à la production indirecte de vapeur de chauffage pour la zone d'échauffement.

4. Procédé correspondant à la revendication 1, et selon lequel le condensat de chauffage provenant de la zone de séchage est utilisé au chauffage de la zone d'échauffement.

5. Procédé correspondant aux revendications 1 à 4, et selon lequel les matières en vrac échauffées sont refroidies dans une zone fermée jusqu'au niveau de la température ambiante.

6. Procédé correspondant à une, au moins, des revendications 1 à 5, et selon lequel un gaz inerte est introduit dans la zone de séchage pour diminuer la pression partielle de la vapeur.

7. Procédé correspondant à la revendication 6, et selon lequel le gaz inerte s'écoule à contre-courant des matières en vrac, est introduit à l'extrémité de la zone de séchage et contient une fraction des composants évaporables libérés dans la zone de séchage.

8. Dispositif servant à la mise en oeuvre du procédé correspondant aux revendications 1 à 7, constitué d'un convoyeur de sechage verticale à vibrations (1), équipé de plusieurs plaques (6) horizontales, à double paroi et circulaires, chacune d'entre elles étant dotée d'une paroi extérieure, et, au fond, au minimum d'une ouverture d'évacuation (13), l'ensemble étant monté sur un arbre central et commun (5); ce convoyeur est intégralement enfermé par une enveloppe (2) comportant au moins, dans sa partie supérieure, un dispositif d'alimentation et, dans sa partie inférieure, un dispositif d'évacuation; les plaques à double paroi comportent des connexions (9, 10) qui servent à l'acheminement et à l'évacuation de l'agent caloporteur. L'ensemble présente les caractéristiques suivantes:

a) dans la direction d'écoulement des matières en vrac, les deux premières plaques (6), au moins, du convoyeur vibrant, sont encloses par une enveloppe (11) dotée d'une ouverture pour l'alimentation en matières et d'une autre ouverture pour l'évacuation des matières;

b) une partie, au moins, des plaques (6) de la zone de séchage (B) comporte au moins une grille radiale à rainures (21) servant à la séparation, au moins, des grosses particules et des particules fines;

c) une partie, au moins, des plaques de la zone de chauffage et de séchage (A, B) comporte des listels mélangeurs (20);

d) chaque plaque (6) est, à son ouverture d'évacuation (19), équipée d'une goulotte (24) conduisant à la plaque suivante.

9. Dispositif correspondant à la revendication 8, et caractérisé par le fait que les dispositifs d'alimentation et d'évacuation sont configurés en écluses à sas ou en écluse alvéolaire (8, 14).

10. Dispositif correspondant aux revendications 8 et 9, et caractérisé par la position tangentielle ou inclinée des fentes des grilles à rainures (21).

11. Dispositif correspondant à la revendication 10 et caractérisé par le fait que sous chaque grille à rainures (21), la goulotte (24) est placée sur la face inférieure des plaques (6).

12. Dispositif correspondant aux revendications 8 à 11, et caractérisé par le fait que les listels mélangeurs (20) sont inclinés radialement par rapport à l'axe de rotation.

13. Dispositif correspondant aux revendications 8 à 12, et caractérisé par le fait que les listels mélangeurs (20) présentent, de l'intérieur vers l'extérieur, des hauteurs différentes.

14. Dispositif correspondant aux revendications 8 à 13, et caractérisé par le fait que la goulotte (23) relie la plaque supérieure (6) à la plaque inférieure (6).

15. Dispositif correspondant aux revendications 8 à 14, et caractérisé par le fait que plusieurs plaques (6) sont reliées au moyen de segments de parois cylindriques (22) placés sur le bord, à proximité des goulottes (23, 24), des listels mélangeurs (20) et des grilles à rainures (21).

16. Dispositif correspondant aux revendications 8 à 15, caractérisé par le fait que la paroi intérieure de l'enveloppe (2) est conçue de façon à servir de condensateur.

17. Dispositif correspondant aux revendications 8 à 16, caractérisé par le fait que l'enveloppe (2) est ouverte d'un côté et plongée dans l'eau (25).

Rohbraunkohle

Fig. 1

Rohbraunkohle

Brüden

Heizdampf

Heizdampfkondensat

getrocknete Braunkohle

Fig. 2

EP 0 268 819 B1

Fig. 3

Rohbraunkohle

Brüden

Kondensat

16

Kondensat

Heizdampf

getrocknete Braunkohle

Fig.4

EP 0 268 819 B1

Rohbraunkohle

Brüden

17

M

18

Brüdenkondensat

Kondensat

Heizdampf

getrocknete Braunkohle

Fig. 5

EP 0 268 819 B1

Schüttgut

A

6.1

6.2

20

22

6.3

21

22

B

6.4

21

6.5

Fig. 6

Fig.7

20    20

Fig. 8

Fig. 9